(19) Europäisches Patentamt
European Patent Office
Office européen des brevets

(11) EP 3 061 970 A1

(12) **EUROPÄISCHE PATENTANMELDUNG**

(43) Veröffentlichungstag:
31.08.2016 Patentblatt 2016/35

(51) Int Cl.:
*F04B 45/04* (2006.01)   *F04B 45/053* (2006.01)

(21) Anmeldenummer: 15157064.5

(22) Anmeldetag: 27.02.2015

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Hofmann, Arno**
**63571 Gelnhausen (DE)**

(72) Erfinder: **Hofmann, Arno**
**63571 Gelnhausen (DE)**

(74) Vertreter: **Walkenhorst, Andreas**
**Tergau & Walkenhorst**
**Patentanwälte - Rechtsanwälte**
**Eschersheimer Landstrasse 105-107**
**60322 Frankfurt (DE)**

(54) **Membranpumpe, insbesondere zur Verwendung im Abgasstrang eines Verbrennungsmotors, und Verbrennungsmotor mit Membranpumpe**

(57) Eine Membranpumpe (1, 1', 1"), insbesondere zur Verwendung im Abgasstrang eines Verbrennungsmotors (70), mit einem Druckgehäuse (2), dessen Innenvolumen (4) über eine Anzahl von elastisch verformbaren Membranen (6) in eine Mehrzahl von gasseitig voneinander getrennten Teilvolumina (8, 10) aufgeteilt ist, wobei die oder jede Membran (6) derart mit einer Vorspannkraft beaufschlagt ist, dass im drucklosen Zustand das die Primärseite bildende Teilvolumen (8) im Rahmen der Verformbarkeit der oder jeder Membran (6) einen Minimalwert aufweist, soll beim Einsatz im Abgassystem eines Verbrennungsmotors (70) besonders wirkungsgradsteigernd wirken. Dazu weist erfindungsgemäß die Innenseite (36) des die Primärseite bildenden Teilvolumens (8) in einem sich von einer Einströmfläche (23) hin zur Membran (6) erstreckenden Diffusorbereich (40) einen sich kontinuierlich erweiternden Querschnitt auf, wobei im drucklosen Zustand der am weitesten in das die Primärseite bildende Teilvolumen (8) hineinragende Punkt der Membran (6) um mindestens 5 mm von der Einströmfläche beabstandet ist.

Fig. 1

EP 3 061 970 A1

**Beschreibung**

Die Erfindung bezieht sich auf eine Membranpumpe, insbesondere zur Verwendung im Abgasstrang eines Verbrennungsmotors, mit einem Druckgehäuse, dessen Innenvolumen über eine Anzahl von elastisch verformbaren Membranen in eine Mehrzahl von gasseitig voneinander getrennten Teilvolumina aufgeteilt ist, wobei die oder jede Membran derart mit einer Vorspannkraft beaufschlagt ist, dass im drucklosen Zustand das die Primärseite bildende Teilvolumen im Rahmen der Verformbarkeit der oder jeder Membran einen Minimalwert aufweist. Sie betrifft weiter einen Verbrennungsmotor mit einer Anzahl von Zylindern, in denen jeweils ein auf eine gemeinsame Kurbelwelle wirkender Arbeitskolben geführt ist, wobei der Brennraum des oder jedes Zylinders jeweils einlassseitig über ein ansteuerbares Einlassventilsystem mit einem Gaseinlasssystem und auslassseitig über ein ansteuerbares Auslassventilsystem mit einer Auspuffanlage verbunden ist.

Membranpumpen kommen in weiten Bereichen technischer Applikationen zum Einsatz, wobei auch Anwendungen im Zusammenhang mit Verbrennungskraftmaschinen bereits diskutiert wurden. So beschreibt beispielsweise die FR 1.031.061 eine gasbetriebene Membranpumpe, die in das Zündkerzenloch eines Motorzylinderkopfs eingeschraubt wird. Bei drehendem Motor wird die Membranpumpe durch die Druckpulsationen des entsprechenden Zylinders angetrieben und pumpt auf der Frischgasseite atmosphärische Luft für sekundäre Verwendungszwecke. In der FR 889.617 ist hingegen eine Membranpumpe beschrieben, die von Pulsationen der Abgase von Verbrennungsmotoren angetrieben wird. Die Abgaspulsationen wirken entweder unmittelbar auf die Membran oder mittelbar über einen in einem Zylinder geführten Kolben, der über eine Druckstange mit entsprechender Membran verbunden ist.

Die FR 866.840 beschreibt wiederum eine gasbetriebene Membranpumpe, die ebenfalls von Pulsationen der Abgase von Verbrennungsmotoren angetrieben wird. Die Ausführung zeigt zwei parallel geschaltete Membranpumpen, die über eigenständige Abgasstränge von phasenversetzten Motorzylindern angetrieben werden, jedoch auf der Frischgasseite sowohl im Ansaugbereich als auch im Ausströmbereich miteinander verbunden sind.

Die eigentliche Einbindung der Membranpumpen in den Abgasstrang des Verbrennungsmotors ist in diesen Druckschriften nicht näher erläutert. Ein Konzept, mit dem durch den Einsatz einer Membranpumpe als so genannte Abgasladepumpe im Abgasstrang eines Verbrennungsmotors dessen Wirkungsgrad, Leistungsabgabe und/oder Effizienz deutlich gesteigert werden kann, ist aus den nicht vorveröffentlichten Anmeldungen EP 2 846 019 A1 und EP 2 846 020 A1 bekannt. Die Offenbarung dieser Anmeldungen, insbesondere betreffend die Ausgestaltungen der einzelnen Motorenkonzepte, die Einbindung der Membranpumpe als Abgasladepumpe in diesen Konzepten sowie die jeweiligen Betriebsweisen, wird ausdrücklich mit einbezogen ("incorporation by reference").

Bei dem aus den nicht vorveröffentlichten Anmeldungen EP 2 846 019 A1 und EP 2 846 020 A1 bekannten Konzept erfolgt der Antrieb der Membranpumpe durch Pulsationen bzw. Druckschwankungen eines Antriebsgases, insbesondere des im Abgasstrang des Verbrennungsmotors geführten Abgases, das in die Primärseite der Membranpumpe geleitet wird und seinen Impuls über die Membran auf das in der dem Antriebsgas gegenüberliegenden Sekundärseite der Membranpumpe vorgehaltene Fördergas überträgt. Insbesondere soll die Membranpumpe kurzzeitig auftretende Gaspulsationen des Antriebsgases, so wie sie beispielsweise in Abgasleitungen von Verbrennungsmotoren auftreten, wirkungsvoll in die Kompression von Fördergas umsetzten, wobei das Fördergas in dieser Anwendung vorteilhafterweise die vom Motor für die Verbrennung anzusaugende Frischluft darstellt. Die Membranpumpe arbeitet somit in diesem Konzept als Luftverdichter, der zur Aufladung bzw. zur Wirkungsgradsteigerung des Verbrennungsmotors genutzt werden kann.

Die Membranpumpe weist dabei eine Zuleitung zum Arbeitsraum der Antriebsseite oder Primärseite auf, durch die das Antriebsgas hinein- und herausströmen kann. Die Zuleitung ist dabei eine Stichleitung, in der das Antriebsgas hin und her pulsiert. Auf der Sekundär- oder Fördergasseite befinden sich mindestens ein Zuströmventil, durch das das Fördergas ausschließlich in den Arbeitsraum oder die Sekundärseite von außen einströmen kann, und mindestens ein Abströmventil, durch das das Fördergas ausschließlich aus dem Arbeitsraum ausströmen kann. Zu- und Abströmventil arbeiten dabei jeweils als selbsttätig steuernde Rückschlagventile. Die Membran wird dabei durch Eigenvorspannung und/oder durch eine externe Kraft, wie beispielsweise die einer oder mehrerer Federn, in einer Ruheposition gehalten, die der maximalen Auslenkung der Membran in Richtung der Antriebsseite entspricht, so dass sich in dieser Membranstellung ein maximales Volumen auf der Förder- oder Sekundärseite und ein minimales auf der Antriebs- oder Primärseite ergibt.

Strömt nun eine Druckwelle durch die Zuleitung in den Arbeitsraum der Primärseite der Membranpumpe, so überträgt sie ihre kinetische Energie durch Impulsübertragung bzw. Druckaufbau des Antriebsgases im Arbeitsraum auf die Membran. Die Membran wölbt sich durch den erbrachten Energieeintrag des Antriebsgases und verringert das Volumen des Arbeitsraums der Sekundärseite und somit des Fördergases, bis die Membran an der Innenkontur des Pumpengehäuses anliegt. Dies ist mit einem Druckanstieg des Fördergases auf der Sekundärseite der Membranpumpe verbunden, so dass dieses durch das Abströmventil aus der Membranpumpe ausgeschoben wird. Bei abnehmendem Druck des Antriebsgases drückt die (Feder-) Vorspannung auf die Membran diese wieder in ihre Ruheposition und saugt dabei Fördergas durch das Zuströmventil in die Sekundärseite an. Gleichzeitig wird das Antriebsgas durch die Zuleitung, durch die es zuvor in den Arbeitsraum der Primärseite eingeströmt ist, wieder ausgeschoben.

Durch dieses Konzept ist auf besonders einfache Weise die Nutzung von Druckpulsen im Abgasstrang des Verbrennungsmotors zur Kompression und/oder Vorverdichtung des Frischgases und damit zur Leistungs- oder Effizienzsteigerung des Verbrennungsmotors ermöglicht.

Der Erfindung liegt nunmehr die Aufgabe zu Grunde, eine Membranpumpe der oben genannten Art anzugeben, mit der die genannten Vorteile insbesondere beim wirkungsgradsteigernden Einsatz im Abgassystem eines Verbrennungsmotors noch weiter gesteigert werden können. Des Weiteren soll ein Verbrennungsmotor mit besonders hoher spezifischer Leistungsausbeute und/oder besonders gering gehaltenem spezifischem Brennstoffverbrauch angegeben werden.

Bezüglich der Membranpumpe wird diese Aufgabe erfindungsgemäß gelöst, indem die Innenseite des die Primärseite bildenden Teilvolumens in einem sich von einer Einströmfläche hin zur Membran erstreckenden Diffusorbereich einen sich kontinuierlich erweiternden Querschnitt aufweist, wobei im drucklosen Zustand der am weitesten in das die Primärseite bildende Teilvolumen hineinragende Punkt der Membran um mindestens 5 mm von der Einströmfläche beabstandet ist.

Die Erfindung geht dabei von der Überlegung aus, dass durch die Membranpumpe eine besonders hohe Steigerung von Effizienz und/oder Leistungsausbeute des Verbrennungsmotors erreicht werden kann, indem der Impulsübertrag von dem in die Primärseite der Pumpe einströmenden Antriebsgas, also insbesondere dem den Druckpuls aus der Abgaswelle des Verbrennungsmotors tragenden Gas, auf die Membran und damit die Kompressionswirkung auf der Sekundär- oder Frischgasseite besonders wirkungsvoll gestaltet wird. Insbesondere sollten dabei Reflexionsphänomene der eintreffenden Druckwelle und dergleichen weitgehend vermieden werden. Um dies zu ermöglichen, sollte die Strömungsführung für das in die Primärseite der Pumpe eintretende Antriebsgas derart gewählt sein, dass Turbulenzbildung möglichst vermieden wird und das Antriebsgas möglichst senkrecht auf die Membran auftreffen kann. Dies ist erreichbar, indem der Auftreffbereich in der Primärseite der Pumpe, also der Raumbereich vor der eigentlichen Membran, in der Art eines Diffusors mit sich zur Membran hin kontinuierlich erweiterndem Querschnitt ausgeführt ist. Dabei sollte das "freie", im drucklosen Zustand die Primärseite bildende Teilvolumen, also das Volumen zwischen der Membran im drucklosen Zustand und der Innenseite des die Primärseite begrenzenden Gehäusedeckels, ausreichend groß gewählt sein, so dass der angestrebte Diffusoreffekt der in die Primärseite einströmenden Druckwelle ausreichend sichergestellt werden kann. Im Hinblick auf gängige oder für den praktischen Einsatz zu erwartende Baugrößen sollte dabei

für der Abstand zwischen der Zone maximaler Ausdehnung der Membran in das Primärvolumen hinein und der Gehäusewand hinreichend groß gewählt werden.

Eine besonders einfache und damit herstellungsfreundliche Bauweise ist dabei erreichbar, indem die erwünschte Diffusorwirkung durch eine geeignete Gestaltung der Innenoberfläche der Primärseite der Membranpumpe vorgegeben wird. Dazu ist der Diffusorbereich vorteilhafterweise als Mantelfläche eines Kegelstumpfs ausgeführt. Dieser weist im Wesentlichen gerade geführte Flanken auf und kann einen elliptischen oder vorzugsweise auch kreisförmigen Querschnitt aufweisen. Vorteilhafterweise beträgt der Öffnungswinkel des Kegelstumpfs zwischen 10° und 30°, da sich mit einer derartigen Wahl ein besonders günstiger Wirkungsgrad erreichen lässt.

Ein weiteres als besonders günstig angesehenes Auslegungsziel für die Formgebung der Primärseite der Membranpumpe, alternativ oder zusätzlich zum angestrebten möglichst senkrechten Auftreffen der in die Primärseite der Pumpe eintretenden Druckwelle auf die Membran, ist ein möglichst großflächiges Auftreffen der Druckwelle auf die Membran. Mit anderen Worten: die Druckwelle sollte für eine besonders wirkungsvollen Impulsübertrag möglichst nicht nur beschränkt auf einen vergleichsweise geringen Flächenausschnitt der Membran, sondern vielmehr möglichst vollflächig auf diese auftreffen.

Um dies besonders zu begünstigen, weist vorteilhafterweise die antriebsgasseitige Einmündung, also insbesondere die Einströmfläche, in das die Primärseite bildende Teilvolumen der Membranpumpe eine frei durchströmbare Querschnittsfläche von höchstens etwa 70 % der Fläche der die das die Primärseite bildende Teilvolumen begrenzenden Membran auf. Damit ist eine Querschnittsvergrößerung innerhalb des als Diffusor ausgestalteten Gehäusebereichs erreicht, die gerade im Hinblick auf die im Zusammenhang mit einer Verwendung im Abgasstrang des Verbrennungsmotors zu erwartenden Druck- und Strömungsverhältnisse eine besonders günstige Führung des eintreffenden Druckpulses erwarten lässt. Vorteilhafterweise sind auch weitere Geometrieparameter des als Diffusorbereich der Primärseite der Pumpe im Einklang mit diesen Kriterien gewählt. Beispielsweise könnte, aus Platz- oder Kostengründen, eine "seitliche" oder tangentiale Einströmung des Antriebsgases in die Primärseite der Membranpumpe vorgesehen sein. Vorteilhafterweise ist die Einströmung aber zentrisch und axial ausgestaltet, da auf diese Weise der Impulsübertrag der eintreffenden Druckwelle auf die Membran besonders umfassend sein kann. Dazu ist vorzugsweise die Zentralachse des Diffusorbereichs parallel zur Mittelachse der Membran ausgerichtet und/oder vorzugsweise konzentrisch zu dieser positioniert. Unter "Mittelachse der Membran" ist hierbei die Oberflächennormale der Membran durch ihren Mittel- oder Schwerpunkt im entspannten oder unverformten Zustand zu verstehen.

Alternativ oder zusätzlich sind dabei die Geometrieparameter besonders bevorzugt derart gewählt, dass der Diffusorbereich des als Primärseite vorgesehenen Innenvolumens der Membranpumpe in Richtung seiner Zentralachse gesehen eine Länge von mindestens dem Eineinhalbfachen des Membranhubs aufweist. Damit ist das Volumen innerhalb des Diffusorbereichs ausreichend viel größer als das Fördervolumen der Membranpumpe, so dass die gewünschte Diffusorwirkung besonders zuverlässig erreicht wird.

Die Membran ist vorteilhafterweise als ebene Kreisplatte ausgeführt, kann aber auch elliptische Form besitzen. Als Materialien sind vorteilhafterweise Metalle oder Kunststoffe (Thermoplaste, Duroplaste, Elastomere, etc.), die Faserverstärkungen (Glasfaser, Kohlefaser, etc.) besitzen können, vorgesehen. Um die mechanische Belastung der Membran unter Zug und Biegung zu reduzieren, ist der Membranrand in besonders vorteilhafter Ausgestaltung beweglich (und nicht starr) in das Druckgehäuse der Membranpumpe eingespannt. Die bewegliche Einspannung kann vorteilhafterweise unter elastischen erhabenen radialen Wölbungen erfolgen, wie beispielsweise über aus den Gehäusedeckeln hervorstehende O-Ringe oder auch grundsätzlich durch eine Einspannung des Membranrands im Gehäuse über eine Zwischenlage aus elastischen Materialien.

Eine weitere Entlastung der Membran wird vorteilhafterweise durch eine in der Fertigung oder im Betrieb aufgebrachte plastische Verformung der Membran in eine gewölbte Form, die annähernd der Wölbung des sekundärseitigen Gehäusedeckels entspricht, erzeugt. Durch diese künstliche Formgebung der Membran reduziert sich die Zugbelastung bei maximaler Auslenkung erheblich. Eine derart vorgewölbte Membran würde theoretisch im Mittendurchgang, welcher durch die Ebene des eingespannten Membranrands definiert wird, Druckspannungen unterliegen, die die dünnwandige Membran zur Falten- oder Knickbildung brächten. Allerdings wirken durch die an der Membran partiell angreifenden rückstellenden Federkräfte lokal ungleiche Flächenbelastungen zwischen Fördergas und Arbeitsgas, so dass die Knickbildung in der Membran ausbleibt und statt dessen Wölbungsmuster höherer Ordnung in der Membran entstehen. Diese Wölbungsmuster können je nach Angriffspunkt der rückstellenden Kräfte radiale Wellenbildung bzw. rosettenförmige Struktur aufweisen. Der Gefahr der Faltenbildung oder Knickung einer (Einzel-) Membran wird vorteilhafterweise durch mehrlagig aufeinander liegende dünnwandige Membranen entgegengewirkt. Die dünnwandigen Membranen, die nunmehr vergleichsweise geringere Stärke aufweisen, besitzen eine höhere Biegewechselfestigkeit, erreichen jedoch bei gleicher Gesamtdicke über die Summe ihrer Anzahl ähnliche Zugfestigkeit wie die ursprüngliche Einzelmembran. Die dünnwandigen Membranen werden im Betrieb durch die beiderseitig wirkenden Gasdrücke aufeinandergedrückt.

Vorteilhafterweise ist im die Primärseite der Membranpumpe bildenden Teilvolumen ein Endanschlag für die das die Primärseite bildende Teilvolumen begrenzende Membran angeordnet. Dieser weist vorteilhafterweise eine federnd gelagerte Auflagefläche für die Membran auf, so dass die Pumpe für die Membran besonders materialschonend betrieben werden kann. Der Endanschlag definiert dabei die Position maximaler Ausdehnung der Membran in das die Primärseite der Pumpe bildende Teilvolumen hinein und damit den am weitesten in das die Primärseite bildende Teilvolumen hineinragenden Punkt der Membran im vorstehend genannten Sinne.

Zur Aufbringung der Vorspannkraft für die Ruheposition der Membran ist vorteilhafterweise eine geeignet dimensionierte und positionierte Feder vorgesehen. Diese kann bevorzugt als Rückstell-Druckfeder im Sekundärvolumen der Membranpumpe oder alternativ bevorzugt als Zugfeder im Primärvolumen der Membranpumpe ausgeführt sein. Bei der Ausgestaltung als Druckfeder im Sekundärvolumen ist sie bevorzugt mit einer Linearführung versehen. Bei der Ausgestaltung als Zugfeder im Primärvolumen ist eine Ausführung als Blattfeder im Hinblick auf die einfache Bauweise besonders bevorzugt.

Bezüglich des Verbrennungsmotors wird die genannte Aufgabe gelöst, indem in sein Abgassystem eine Membranpumpe derart geschaltet ist, dass der Brennraum des oder jedes Zylinders jeweils einlassseitig über ein ansteuerbares Einlassventilsystem mit einem Gaseinlasssystem und auslassseitig über ein ansteuerbares Auslassventilsystem über eine Impulsweiche sowohl mit einer Auspuffanlage als auch über eine Stichleitung mit der Primärseite der sekundärseitig in das Gaseinlasssystem geschalteten Membranpumpe verbunden ist, wobei eine von der Impulsweiche über die Primärseite der Membranpumpe zur Membran geleitete Druckwelle einen Diffusor durchläuft.

Die angestrebte Diffusorwirkung kann dabei erreicht werden, indem die Membranpumpe nach dem oben genannten Konzept ausgelegt ist, also durch die geometrische Ausgestaltung der Innenseite des die Primärseite bildenden Teilvolumens als Diffusor. Alternativ oder zusätzlich kann aber auch vorgesehen sein, die angestrebte Diffusorwirkung durch eine entsprechende Auslegung der zur Primärseite der Membranpumpe führenden Stichleitung zu erreichen. In dieser als eigenständig erfinderisch angesehenen Variante weist die die Membranpumpe primärseitig mit der Impulsweiche verbindende Stichleitung in ihrem Einmündungsbereich in die Membranpumpe eine im Vergleich zu ihrer Verbindungsstelle mit der Impulsweiche mindestens um das Eineinhalbfache vergrößerte freie Querschnittsfläche auf. Die zur Darstellung der Diffusorfunktion vorgesehene Aufweitung des Querschnitts ist in dieser Variante der Erfindung somit zumindest teilweise bereits in der der Membranpumpe primärseitig vorgeschalteten Zuführleitung für das Antriebsgas, also die Druckwelle aus dem Abgasstrang, realisiert.

In ganz besonders bevorzugter und ebenfalls als eigenständig erfinderisch angesehener Ausführung kann auf der Grundlage dieser Variante, also der Integration des Diffusors in die von der Impulsweiche abgehende Stichleitung, auch eine Hybridbauweise vorgesehen sein, bei der Elemente mehrerer Membranpumpen in einem Gesamtsystem zusammengefasst sind. Insbesondere sind dabei vorteilhafterweise einem gemeinsamen Primärvolumen in einem gemeinsamen Gehäusedeckel eine Mehrzahl von gasseitig voneinander getrennten Sekundärvolumina zugeordnet. Damit können auf besonders einfache Weise mehrere Membranpumpen gasseitig parallel angeordnet werden, um ein größeres Pumpvolumen zu erreichen. Vorteilhaft sind dabei Anordnungen, bei denen die Kammern gleicher Funktion zusammengefasst werden. Insbesondere ist dabei bevorzugt ein gemeinsamer Gehäusedeckel für zwei oder mehr Pumpeneinheiten vorgesehen. Eine solche Doppelkammer auf der Seite des Arbeitsgases lässt das Antriebsgas vorteilhafterweise seitlich auf das Zentrum der Membranen zuströmen. Auch hier ist bevorzugt ein diffusorartiger Rohrverlauf vorgesehen, der sich vom Leitungsquerschnitt zur Membranpumpe hin vergrößert und dabei einen annähernd rechteckigen Querschnittsverlauf annimmt und zu dem gewünschten Druckverlauf führt.

In besonders vorteilhafter Ausgestaltung ist der Verbrennungsmotor dafür ausgelegt, dass die Membranpumpe auch im Betriebsfall nicht unmittelbar mit heißen Gasen wie dem Abgas aus den Brennräumen beaufschlagt wird, sondern dass vielmehr eine thermische Entkopplung der Membranpumpe vom eigentlich vom Abgas durchströmten Auspuffstrang vorliegt. Dabei wird vorteilhafterweise gezielt der Umstand genutzt, dass bei der Beaufschlagung der Primärseite der Membranpumpe mit der diese antreibenden Druckwelle gasseitig lediglich ein Verschiebestrom vorliegt, bei dem das in der Stichleitung und ggf. in der Primärkammer befindliche Gaspolster infolge der eintreffenden Druckwelle lediglich weiter in diese hineingeschoben wird, bevor nach erfolgtem Impulsübertrag das Gas wieder in die Stichleitung zurückgedrückt wird. Dies kann zur thermischen Entkopplung im genannten Sinne genutzt werden, indem das genannte Gaspolster durch geeignete Wahl der Geometrieparameter, insbesondere Volumen innerhalb der Stichleitung und ggf. noch das "Leer"-Volumen in der Primärkammer der Membranpumpe, ausreichend groß bemessen wird. "Ausreichend" bedeutet in diesem Sinne insbesondere, dass dieses Gaspolster von seinem Volumen her größer ist als das Gasvolumen, das sich maximal in der Primärseite der Membranpumpe befinden kann. Durch eine derartige Auslegung ist sichergestellt, dass das aus dem Brennraum des jeweiligen Zylinders abströmende Abgas nach Passieren der Impulsweiche nicht bis in die Primärkammer der Membranpumpe gelangen kann. Dazu beträgt vorteilhafterweise das von dem die Primärseite der Membranpumpe bildenden Teilvolumen und dem Innenvolumen der Stichleitung gemeinsam gebildete Gaspolstervolumen mindestens das 1,5-Fache, vorzugsweise mindestens das 3-Fache, des Pumpvolumens der Membranpumpe.

Durch eine derartige Wahl der Geometrieparameter ist unter anderem auch ermöglicht, die Membranpumpe ganz oder in Teilen aus thermisch nicht beständigen oder zumindest nicht hoch belastbaren Materialien wie beispielsweise auf Kunststoffbasis auszuführen.

Die mit der Erfindung erzielten Vorteile bestehen insbesondere darin, dass durch die Einspeisung der Abgasdruckwelle in die Primärseite der Membranpumpe über einen Diffusor ein besonders effizienter Impulsübertrag von der Abgasdruckwelle auf die Membran und somit eine besonders wirkungsvolle Kompression des auf der Sekundärseite befindlichen Gases, also insbesondere des Frischgases für den Verbrennungsmotor, erzielt werden kann. Damit ist ein besonders hoher Wirkungsgrad des Verbrennungsmotors erreichbar.

Ein Ausführungsbeispiel der Erfindung wird anhand einer Zeichnung näher erläutert. Darin zeigen:

FIG. 1    eine Membranpumpe im Querschnitt,

FIG. 2    eine alternative Ausführungsform einer Membranpumpe im Querschnitt,

FIG. 3    eine ausschnittsweise Vergrößerung aus FIG. 1,

FIG. 4    eine weitere alternative Ausführungsform einer Membranpumpe im Querschnitt,

FIG. 5    schematisch einen Verbrennungsmotor, und

FIG. 6    eine Membranpumpeneinheit im Querschnitt.

Gleiche Teile sind in allen Figuren mit denselben Bezugzeichen versehen.

Die Membranpumpe 1 umfasst ein Druckgehäuse 2, dessen Innenvolumen 4 über eine elastisch verformbare Membran 6 in eine Mehrzahl - im dargestellten Ausführungsbeispiel zwei - von gasseitig voneinander getrennten Teilvolumina 8, 10 aufgeteilt ist.

Zwischen einem primärgasseitigen Gehäusedeckel 12 (Primärseite) und einem frischgasseitigen Gehäusedeckel 14 (Sekundärseite), die gemeinsam das Druckgehäuse 2 bilden, befindet sich somit als elastisch verformbare Zwischenwand die Membran 6. Diese trennt das die Primärseite bildende Teilvolumen 8 und das die Sekundärseite bildende Teilvolumen 10, die sich zwischen der Membran 6 und den gewölbten Innenflächen der beiden Gehäusedeckel 12 bzw. 14 aufspannen, gasdicht voneinander. Das erste Teilvolumen 8 bildet dabei in dem Sinne die Primärseite und somit das Primärvolumen der Membranpumpe 1, dass in dieses Volumen das Antriebsgas eingeleitet wird und damit die Pumpe treibt. Das zweite Teilvolumen 10 ist demgegenüber der Gasraum für das Frischgas, auf das die Enthalpie übertragen werden soll bzw. das komprimiert werden soll, und bildet somit die Sekundärseite der Pumpe.

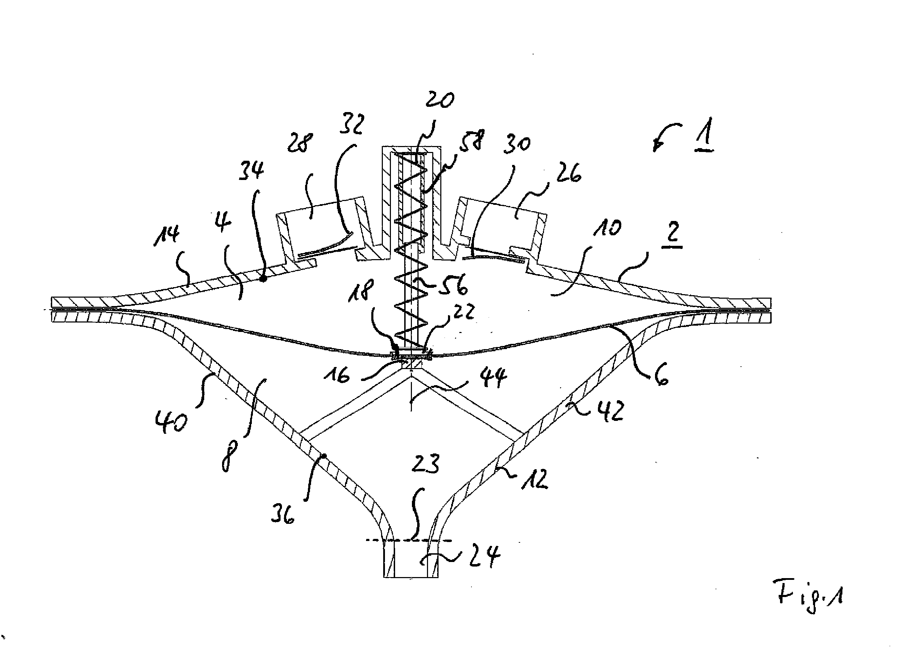

Die Membran 6 ist mechanisch derart mit einer Vorspannkraft beaufschlagt, dass im drucklosen Zustand das die Primärseite bildende Teilvolumen 8 im Rahmen der Verformbarkeit der Membran 6 einen Minimalwert aufweist. In diesem Zustand, der der Darstellung in FIG. 1 entspricht, liegt die Membran 6 somit mit ihrem Mittelpunkt an einem innerhalb des Teilvolumens 8 positionierten Anschlag 16 an. Um die mechanischen Belastungen der Membran 6 während des Betriebs vergleichsweise gering zu halten, ist der Anschlag 16 zumindest an seiner der Membran 6 zugewandten Seite elastisch oder federnd ausgeführt. Des Weiteren ist die Membran 6 in ihrem Mittenbereich, in dem sie im dargestellten drucklosen Zustand am Anschlag 16 anliegt, mit einer metallischen Kontaktscheibe 18 versehen.

Zur Bereitstellung der genannten Vorspannkraft ist im Ausführungsbeispiel gem. FIG. 1 eine im die Sekundärseite bildenden Teilvolumen 10 angeordnete Feder 20 vorgesehen. Diese lenkt die Membran 6 im drucklosen Zustand aus ihrer spannungsfreien Mittellage Richtung zum Anschlag 16 hin aus, so dass die Membran 6 an diesem anliegt. Die Vorspannkraft der Feder 20 ist dabei größer als die Rückstellkraft der maximal ausgelenkten Membran 6 gewählt, so dass die Membran 6 im Zustand ohne Gasdruckbeaufschlagung voll ausgelenkt zuverlässig am Anschlag 16 anliegt. Die Feder 20 stützt sich ihrerseits am sekundärgasseitigen Gehäusedeckel 14 und über einen Federteller 22 ab, der mit der Membran 6 fest verbunden ist.

Im primärgasseitigen Gehäusedeckel 12 ist als gasseitige Einmündung in die durch die gestrichelte Linie angedeutete Einströmfläche 23 mindestens ein Einund Auslasskanal 24 angeordnet, durch den das Antriebsgas bzw. die zur Impulsübertragung genutzte Gassäule in das das Primärgasvolumen der Membranpumpe 1 bildende Teilvolumen 8 der Primärseite ein- bzw. ausströmen kann. Zum die Sekundärseite der Membranpumpe 1 bildenden zweiten Teilvolumen 10 und entsprechend durch den dieses begrenzenden Gehäusedeckel 14 hindurch führen hingegen mindestens ein Frischgassaugkanal 26 und mindestens ein Frischgasdruckkanal 28. Diese sind jeweils mit Rückschlagventilen (Zungenventilen) 30, 32 ausgestattet, so dass ein Gasfluss im Frischgassaugkanal 26 ausschließlich in das Teilvolumen 10 der Sekundärseite der Membranpumpe 1 hinein und im Frischgasdruckkanal 28 ausschließlich aus dem Teilvolumen 10 der Sekundärseite heraus stattfinden kann. Zwecks hohen Kompressionsverhältnisses auf der Sekundärseite sind die Rückschlagventile 30, 32 vorzugsweise so nahe wie möglich an der Innenfläche 34 des Gehäusedeckels 14 angebracht, um bei Auslenkung der Membran 6 an die Innenfläche 34 das verbleibende Restvolumen (Schadvolumen) zwischen Membran 6 und den Rückschlagventilen 30, 32 möglichst klein zu halten.

Im Ruhezustand ist die Membran 6 in Folge der Vorspannung maximal auf die Primärseite ausgelenkt, und das Teilvolumen 8 der Primärseite ist minimal. In diesem Zustand wird somit der am weitesten in das die Primärseite bildende Teilvolumen 8 hineinragende Punkt der Membran 6 durch die am Anschlag 16 anliegende Kontaktplatte 18 definiert. Auf der Sekundärseite ist das entsprechende Teilvolumen 10 hingegen maximal mit Frischgas gefüllt. Wird nun die Primärseite durch den Ein- und Auslasskanal 24 mit unter Druck stehendem Antriebsgas (bzw. dem Gaspolster) beaufschlagt, so bewegt sich die Membran 6 Richtung Sekundärseite und verdrängt unter Kompression das im Teilvolumen 10 der Sekundärseite gespeicherte Frischgas durch das Rückschlagventil 32 in den nachgelagerten Frischgasdruckkanal 28, bis die Membran 6 an der Innenfläche 34 anliegt. Entspannt sich nachfolgend der Gasdruck auf der Primärseite (beispielsweise durch ein "Zurückfluten" des Antriebsgaswelle), so wird die Membran 6 durch die Feder 20 und die anfangs vorhandene Membranrückstellkraft wieder an den Anschlag 16 gedrückt. Das Gas auf der Primärseite wird somit teilweise ausgeschoben und gleichzeitig das zunehmende Teilvolumen 10 auf der Sekundärseite mit Frischgas durch den Frischgassaugkanal 26 gefüllt. Die in der komprimierten Feder 20 gespeicherte Energie wird somit zum Ladungswechsel (Ausschieben von Abgas und Ansaugen von Frischgas) in der Membranpumpe 1 genutzt.

Die Membranpumpe 1 ist gezielt für einen besonders hohen Wirkungsgrad bei der Umsetzung des vom durch den Ein- und Auslasskanal 24 in das erste Teilvolumen 8 einströmenden Antriebsgases mitgeführten Impulses oder Druckpulses in eine Bewegung der Membran 6 und demzufolge eine Kompression des im zweiten Teilvolumen 10 vorgehaltenen Frischgases ausgelegt. Um dies zu ermöglichen und die kinetische Energie des Gasimpulses einer eintreffenden Druckwelle besonders effizient in eine Membranbewegung umzuwandeln, ist es vorgesehen, den Gasstrom möglichst auf die gesamte bzw. einen Großteil der Membranfläche zu leiten. Dabei sollte Turbulenzbildung weitestgehend vermieden werden, damit der Impuls der Gasmoleküle vornehmlich senkrecht auf die Membran 6 treffen kann. Aus diesen Gründen ist die Membranpumpe 1 von ihrem Bauprinzip her dafür ausgelegt, die eintreffende Druckwelle vor ihrem Auftreffen auf die Membran 6 durch ein Diffusorelement zu leiten.

Im Ausführungsbeispiel gem. FIG. 1 ist dies durch eine geeignete Formgebung der Innenseite 36 oder Innenfläche des die Primärseite bildenden Teilvolumens 8 erreicht. Die Innenseite 36 ist dabei derart geformt, dass sie in einem als Diffusorbereich 40 ausgestalteten Teilabschnitt den Diffusor mit sich in Richtung auf die Membran 6 zu stetig erweiterndem Querschnitt bildet. Um dabei ein für die abgestrebte Diffusorwirkung besonders geeignet dimensioniertes Vorvolumen bereitzustellen, innerhalb dessen sich die eintreffende Druckwelle vor dem Kontakt mit der Membran 6 ausreichend gut ausbreiten kann, ist dabei im Ausführungsbeispiel für die Positionierung des Anschlags 16 ein Abstand von der Einströmfläche 23 von etwa 25 bis 30 mm vorgehen. Damit wird das Auslegungskriterium umgesetzt, dass im drucklosen Zustand für den am weitesten in das die Primärseite bildende Teilvolumen 8 hineinragende Punkt der Membran 6, also die am Anschlag 16 anliegende Kontaktplatte 18, ein Mindestabstand von mindestens 5 mm von der Einströmfläche 23 eingehalten werden sollte.

Um die diffusorartige Ausgestaltung des Gehäusedeckels 12 auf besonders einfache Weise umzusetzen, ist im Ausführungsbeispiel die Innenseite 36 des primärseitigen Gehäusedeckels im Diffusorbereich 40 als Mantelfläche eines Kegelstumpfs 42 ausgeführt.

Im Ausführungsbeispiel gem. FIG. 1 ist dabei bauartbedingt der primärgasseitige Gehäusedeckel 12 im Diffusorbereich 40 in seiner Gesamtheit, also sowohl innenseitig als auch außenseitig, in der Art eines Kegelstumpfs 42 ausgeführt. Alternativ ist es selbstverständlich auch möglich, zur Erreichung des gewünschten Diffusoreffekts lediglich die Innenseite 36 des Gehäusedeckels 12 auf die genannte Art auszuführen und seine Außenseite mit anderer, für den jeweiligen Einsatzzweck geeigneter Geometrie, beispielsweise zylindrisch, zu gestalten.

Der gasseitige Einlass 23 und somit der Ein- und Auslasskanal 24 in das die Primärseite bildende Teilvolumen 8 weisen im Ausführungsbeispiel eine frei durchströmbare Querschnittsfläche von etwa 2 bis 5 % und somit von höchstens 70 % der Fläche der das die Primärseite bildende Teilvolumen 8 begrenzenden Membran 6 auf. Der Öffnungswinkel des Kegelstumpfs 42 beträgt vorzugsweise und für einen besonders hohen Wirkungsgrad zwischen 10° und 30°.

Hinsichtlich der Geometrie und Formgebung besteht das Druckgehäuse 2 der Membranpumpe 1 somit im Wesentlichen aus den beiden Gehäusedeckeln 12, 14, deren Fügungsebene die Ebene der Membran 6 oder eine Parallelebene dazu darstellt. Die Innenkontur des sekundärseitigen Gehäusedeckels 14 bestimmt maßgeblich die Verformung der Membran 6 in ihrem ausgelenkten Zustand und damit deren mechanische Belastung. Auf der Sekundär- oder Fördergasseite, also im Gehäusedeckel 14, ist dessen Innenkontur zweckmäßigerweise derart gestaltet, dass die Membran 6 sich unter dem Druck des Antriebsgases vom Membranrand zum Zentrum hin an die Innenfläche 34 anlegt, d.h. aufrollt, und die maximal zulässigen Zug- und Biegespannungen des Membranmaterials nicht überschritten werden. Für die am Rand fest eingespannte Membran 6 ist somit vorzugsweise eine Gehäusedeckelkontur vorgesehen, die prinzipiell im Querschnitt einem liegenden Doppel-S entspricht, und für den beweglich eingespannten Membranrand eine Gehäusedeckelkontur, die einer Kuppel entspricht.

Auf der Antriebs- oder Primärseite weist der Gehäusedeckel 12 hingegen bei zentrischer Federanordnung gerade im als Diffusor ausgeführten Bereich 40 eine trichterförmige Kontur auf, wobei ein fest eingespannter Membranrand einen zur Membran parallel auslaufenden Trichterrand benötigt und die beweglich eingespannte Membran einen abfallenden Trichterrand erhalten kann. Die Trichterkontur selbst kann zum Zentrum hin im Querschnitt geradlinig oder auch leicht konkav verlaufen.

Die Gehäusedeckel 12, 14 lassen sich prinzipiell kostengünstig als Kunststoffspritzgussteile, Blechpressteile oder Druckgussteile herstellen.

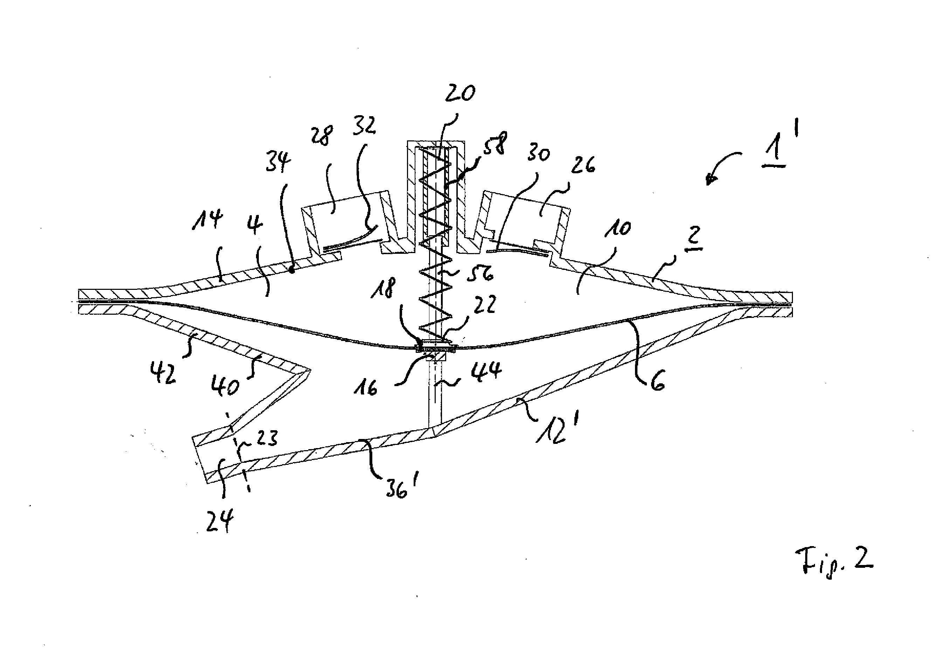

Als besonders vorteilhaft wird die zentrische Anströmung der Membran 6 durch die eintreffende Druckwelle oder das eintreffende Antriebsgas angesehen. Zu diesem Zweck ist, wie dies im Ausführungsbeispiel gem. FIG. 1 dargestellt ist, die Zentralachse 44 des Diffusorbereichs 40 parallel zur Mittelachse der Membran 6 ausgerichtet und konzentrisch zu dieser positioniert. Unter "Mittelachse der Membran 6" ist hierbei die Oberflächennormale der Membran 6 durch ihren Mittel- oder Schwerpunkt im entspannten oder unverformten Zustand zu verstehen. Falls hingegen die senkrechte Anströmung auf die Membran 6 beispielsweise aus Platzgründen oder bauartbedingt nicht möglich ist, kann auch eine tangentiale diffusorartige Einströmung vorgesehen sein. Ein Ausführungsbeispiel für eine derartige Bauweise ist in FIG. 2 gezeigt. Diese Anordnung in der Membranpumpe 1' erlaubt zwar nicht die ausschließlich symmetrische Anströmung der Membran 6, nutzt aber ebenso den Großteil der zur Verfügung stehenden Membranfläche, um auf diese Impuls zu übertragen. In beiden Ausführungsformen weist bevorzugt für eine besonders günstige Diffusorwirkung der Diffusorbereich 40 in Richtung seiner Zentralachse 44 gesehen eine Länge von mindestens dem Eineinhalbfachen des Membranhubs auf.

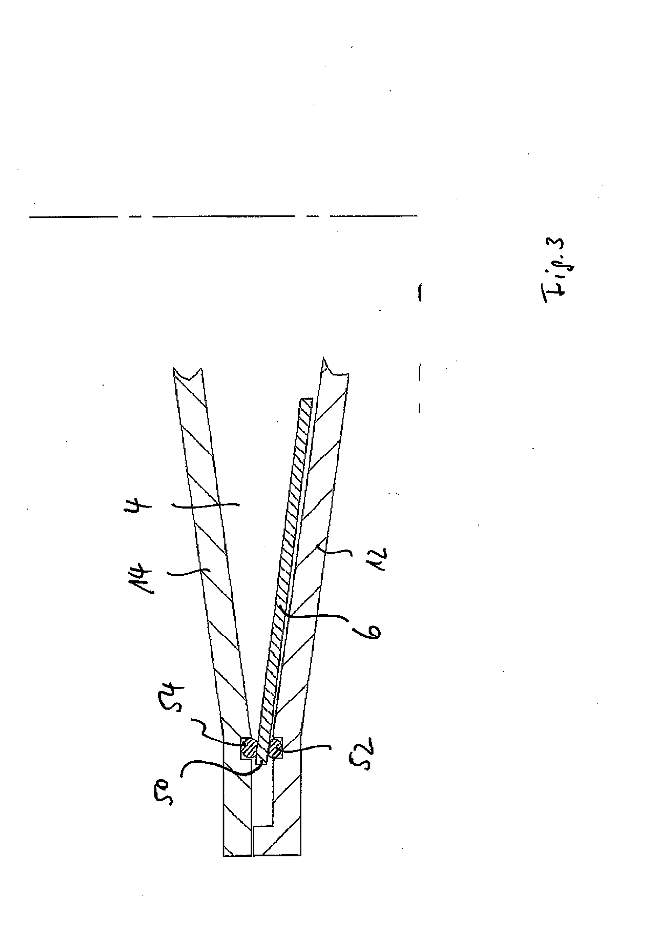

Die Membran 6 ist im Ausführungsbeispiel als ebene Kreisplatte ausgeführt, kann aber auch eine elliptische Form besitzen. Als Materialien sind insbesondere Metalle oder Kunststoffe (Thermoplaste, Duroplaste, Elastomere, etc.), die Faserverstärkungen (Glasfaser, Kohlefaser, etc.) besitzen können, vorgesehen. Um die mechanische Belastung der Membran 6 unter Zug und Biegung und damit während des Betriebs der Membranpumpe 1, 1' zu reduzieren, ist, wie der ausschnittsweise vergrößerten Darstellung in FIG. 3 entnehmbar ist, der Membranrand 50 beweglich zwischen den Gehäusedeckeln 12, 14 eingespannt. Die bewegliche Einspannung wird dabei mittels elastischer erhabener radialer Wölbungen erreicht. Im Ausführungsbeispiel sind dazu aus den Gehäusedeckeln 12, 14, jeweils hervorstehende O-Ringe 52, 54 vorgesehen. Alternativ wäre grundsätzlich auch eine Einspannung des Membranrands 50 im Druckgehäuse 2 über eine Zwischenlage aus elastischen Materialien möglich.

Eine weitere Entlastung der Membran 6 kann durch eine in der Fertigung oder im Betrieb entstehende plastische Verformung der Membran 6 in eine gewölbte Form, die annähernd der Wölbung des Gehäusedeckels 14 entspricht, hervorgerufen werden. Durch eine derartige künstliche Formgebung der Membran 6 reduziert sich die Zugbelastung bei maximaler Auslenkung erheblich. Eine derart vorgewölbte Membran 6 würde theoretisch im Mittendurchgang, welcher durch die Ebene des eingespannten Membranrands 50 definiert wird, Druckspannungen unterliegen, die die dünnwandige Membran 6 zur Faltenbildung bzw. Knickbildung brächten. Andererseits wirken jedoch durch die an der Membran 6 partiell oder lokal angreifenden rückstellenden Federkräfte lokal ungleiche Flächenbelastungen zwischen Fördergas und Arbeitsgas, so dass eine Knickbildung in der Membran 6 auszubleiben scheint und stattdessen Wölbungsmuster höherer Ordnung in der Membran 6 entstehen. Diese Wölbungsmuster können je nach Angriffspunkt der rückstellenden Kräfte radiale Wellenbildung bzw. eine rosettenförmige Struktur aufweisen.

Der Gefahr einer Faltenbildung oder Knickung einer (Einzel-)Membran 6 kann in der Art einer bevorzugten Ausführungsform durch mehrlagig aufeinander liegende dünnwandige Membranen entgegengewirkt werden. Die dünnwandigen Membranen, die nunmehr individuell jeweils geringere Stärke aufweisen, besitzen höhere Biegewechselfestigkeit, erreichen jedoch bei gleicher Gesamtdicke, über die Summe ihrer Anzahl, eine ähnliche Zugfestigkeit wie eine Einzelmembran. Die dünnwandigen Membranen werden im Betrieb durch die beiderseitig wirkenden Gasdrücke aufeinandergedrückt.

Sowohl im Ausführungsbeispiel nach FIG. 1 als auch im Ausführungsbeispiel nach FIG. 2 wird die rückstellende Kraft auf die Membran 6 durch die auf der Arbeitsgasseite oder Sekundärseite im Teilvolumen 10 angeordnete, als Druckfeder ausgeführte Feder 20 ausgeübt. Die dabei vorgesehene zentrische Anordnung der Feder 20 ist vorteilhaft, da nominell keine Seitenkräfte durch Biegung der Membran 6 wirken. Um eine ausschließlich axiale Bewegung der Feder 20 sicherzustellen, ist die Feder 20 mit einer Linear- oder eine Axialführung versehen. Diese wird im Ausführungsbeispiel durch einen mit der Membran 6 verbundenen und auf ihr senkrecht stehenden Führungsstift 56 gewährleistet, der seinerseits in einem fest stehenden Gleitlager 58 geführt ist. Alternativ können auch eine oder mehrere Zugfedern auf der Primärseite der Membran 6, also im Teilvolumen 8, vorgesehen sein. Allerdings zeigen ösenförmige Einspannungen der Federenden wegen deren Abknickung schlechtes Dauerhaltbarkeitsverhalten. Die Federenden sollten in diesem Anwendungsfall, ähnlich wie bei Druckfedern, über Federteller, die jeweils den ersten Windungsgang der Zugfeder fassen, ausgeführt sein. Vorteilhaft wäre eine solche Zugfeder gegenüber der Druckfeder hinsichtlich der entfallenden Knickgefahr, so dass eine Linearführung der Membran 6 nicht erforderlich wäre.

Da grundsätzlich die bewegten Massen der Membran 6, Feder 20 und Linearführung gering gehalten werden sollten, ist es erstrebenswert, auf die Linearführung zu verzichten und die vornehmlich aus Stahl verfügbaren Druck bzw. Zugfedern durch Federsysteme zu ersetzen, die aus Materialien geringerer Dichte herstellbar sind. Weiterhin ist erstrebenswert, den Bauraum für das Federsystem klein zu halten, insbesondere die axiale Länge der vorgespannten Feder(n).

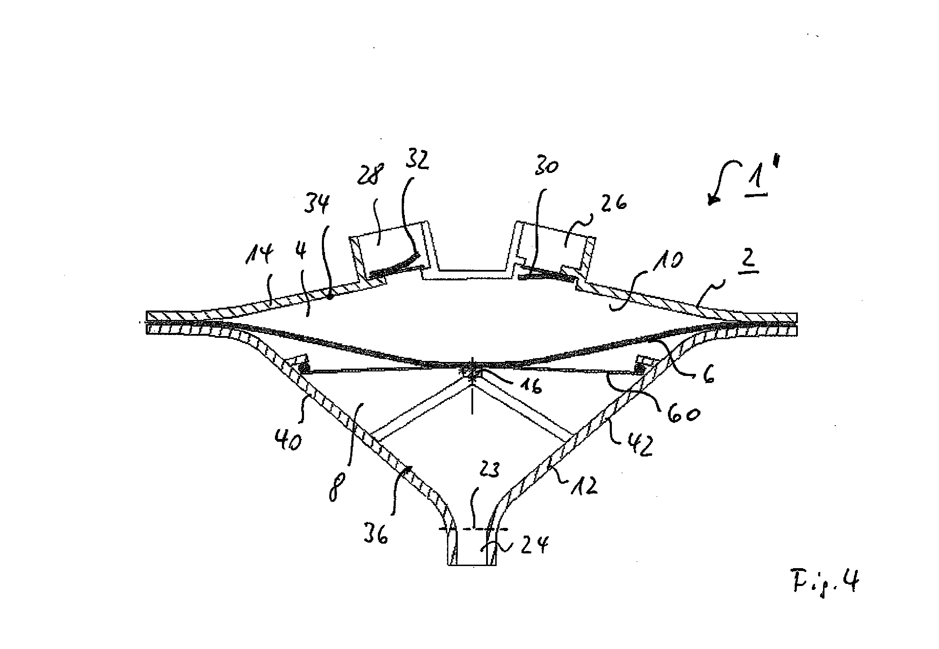

Ein Federsystem, das keine Linearführung benötigt, ist die Blattfeder bzw. alle Derivate, die aus diesem Federtyp ableitbar sind, wie auch die aus mehreren Blattfederzungen bestehende Lamellenfeder, wie sie beispielsweise als Federsysteme in Fahrzeugkupplungen Verwendung findet. Vorteilhaft bieten sich Federwerkstoffe aus leichten Faserverbundmaterial mit hohem E-modul, wie CFK an. Diese Materialien haben etwa nur ein Viertel der Dichte von Stahl. Im Ausführungsbeispiel gem. FIG. 4 ist eine alternative Ausführungsform der Membranpumpe 1" gezeigt, bei der die Rückstellkraft auf die Membran 6 über eine solche Blattfeder erzeugt wird. Die Blattfeder 60 kann dabei auf der Arbeitsgas- oder Primärseite, somit also wie in FIG. 4 in Form einer Balkenfeder dargestellt im Teilvolumen 8, oder alternativ auch auf der Fördergas- oder Sekundärseite und somit im Teilvolumen 10 angeordnet sein. Ist die Blattfeder 60 mit ihrem festen Ende mit der Membran 6 verbunden, so drückt das jeweilige freie Ende der Blattfeder 60 sich vom Gehäusedeckel 14 ab bzw. zieht sich an den Gehäusedeckel 12 heran, je nachdem auf welcher Seite der Membran 6 die Blattfeder 60 positioniert ist. Ebenso kann die Blattfeder 60 fest mit einem der Gehäusedeckel 12, 14 verbunden sein, so dass die freien federnden Enden auf die Membran 6 wirken. Eine symmetrische Krafteinbringung der Blattfeder 60 auf die Membran 6 ist vorteilhaft, wobei die Einzelkräfte in ihrer Summe im Flächenschwerpunkt der Membran 6 wirken sollten.

Die Blattfeder 60 kann aus mehreren übereinanderliegenden Einzelfedern bestehen oder auch mehrarmig mit entsprechender Anzahl freier Federenden ausgeführt sein.

Wegen der Mikrobewegungen, die an den freien Enden der Blattfeder 60 bei Bewegung entstehen, werden die Federenden in vorteilhafter Weise mittelbar über Gleitelemente z.B. aus Kunststoff gegen ihre Auflage abgestützt oder sind über schwenk- bzw. drehbare Elemente mit der Auflage verbunden. Die Blattfeder 60 kann annähernd Bauraumneutral in das Druckgehäuse 2 integriert werden.

Auch eine Luftfederung der Membran 6 wäre möglich. Vorteile ergeben sich dabei hinsichtlich der geringen Federmasse und des ermöglichten Verzichts auf eine Linearführung. Diese Luftfeder könnte vorteilhafterweise aus einem hermetisch verschlossenem Gasvolumen in einem verformbaren Behälter bestehen, der durch die Membran 6 komprimiert wird. Ein solcher Behälter könnte beispielsweise in Form eines Faltenbalgs oder lediglich einer Kugel ausgeführt werden.

Im Bereich der Federkrafteinleitung ist die Membran 6 vorteilhafterweise durch Stützscheiben verstärkt, um Knickbeanspruchungen bzw. hohe Flächenpressungen zu reduzieren.

Die Federkraft bzw. Kennlinie der Feder 20, 60 sollte bei maximaler Auslenkung der Membran 6 in das erste, primärseitige Teilvolumen 8 einen Mindestkraftüberschuß aufweisen, der jener Kraft entspricht, die durch den minimalen Gasdruck den Pulsationen des Arbeitsgases über die Membranfläche entgegenwirkt. Die maximale Rückstellkraft der Feder 20, 60 bei voller Membranauslenkung in den Fördergasraum oder das sekundärseitige Teilvolumen 10 wird durch mehrere Faktoren bestimmt, wie der Pulsfrequenz des Arbeitsgases, den bewegten Massen, dem Fördervolumen der Pumpe und dem Gegendruck des Fördergases beim Ausschieben aus der Pumpe. Die Federkräfte und deren Verlauf über den Federhub, sprich die Kennlinie, sollten daher auf den Anwendungsfall der Pumpe individuell abgestimmt werden.

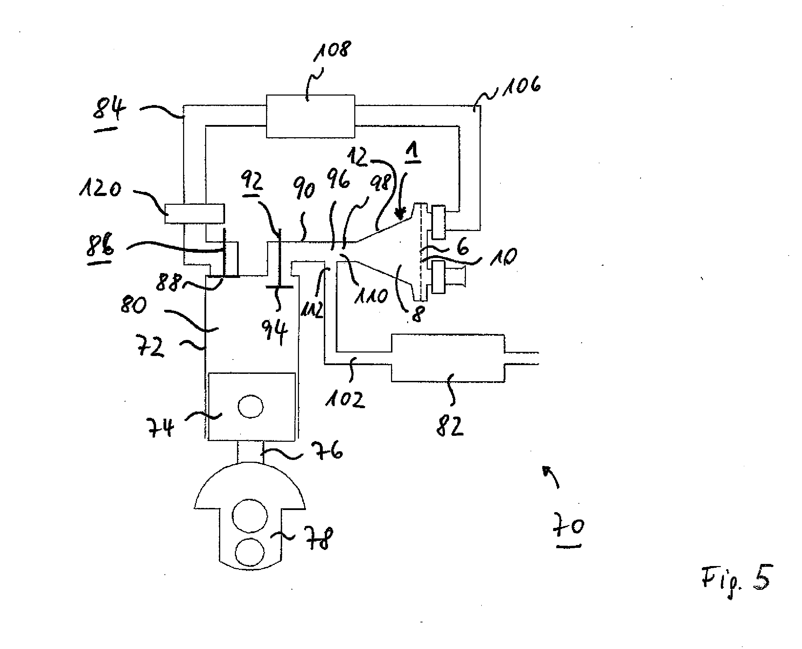

Besonders vorteilhaft und in als eigenständig erfinderisch angesehener Ausführung kommt die nach den vorstehenden Erläuterungen ausgeführte Membranpumpe 1, 1', 1" in der Art einer so genannten Abgasladepumpe im Abgasstrang eines Verbrennungsmotors zum Einsatz. Damit können die Vorteile der Einleitung des Antriebsgases in den Primärraum der Membranpumpe über einen Diffusor besonders wirkungsgradsteigernd genutzt werden. Ein solcher Verbrennungsmotor kann somit mit besonders hoher spezifischer Leistungsausbeute und/oder besonders gering gehaltenem spezifischem Brennstoffverbrauch ausgeführt werden. Als Ausführungsbeispiel hierfür ist in FIG. 5 schematisch ein Verbrennungsmotor 70 dargestellt, der nach dem 4-Takt-Verfahren ausgelegt ist. Er umfasst eine Anzahl von Zylindern 72, von denen in FIG. 5 lediglich einer dargestellt ist, und in denen jeweils ein Arbeitskolben 74 geführt ist. Der Arbeitskolben 74 wirkt über ein Pleuel 76 auf eine Kurbelwelle 78. Je nach Auslegung und Bauart des Verbrennungsmotors 70 können dabei auch der oder die Arbeitskolben 74 mehrerer oder aller Zylinder 72 auf eine gemeinsame Kurbelwelle 78 wirken.

Innerhalb des Zylinders 72 befindet sich in herkömmlicher Bauweise der Brennraum 80, in dem im Arbeitstakt des Zylinders 72 ein komprimiertes Brennstoff-LuftGemisch zur Verbrennung gebracht wird. In Reaktion hierauf führt der im Zylinder 72 verschiebbar angeordnete Arbeitskolben 74 einen Arbeitshub aus, wobei er die Kurbelwelle 78 arbeitsleistend antreibt. Nach der Vollendung des Arbeitshubs, also nach erfolgter Expansion des verbrannten Arbeitsgases im Zylinder 72 und kurz vor Erreichen des so genannten "unteren Totpunkts" (UT), wird das verbrannte Arbeitsgas als Abgas während eines Auslasstakts des Zylinders 72 einer auslassseitig an diesen angeschlossenen Auspuffanlage 82 zugeführt.

Für die zum Betrieb des Zylinders 72 erforderlichen Gaswechsel ist der Brennraum 80 gaseinlassseitig mit einem Gaseinlasssystem 84 und auslassseitig mit der Auspuffanlage 82 verbunden. Zur Steuerung der Gaswechsel im Brennraum 80 ist dabei der Brennraum 80 einerseits gegenüber dem Gaseinlasssystem 84 mittels eines Einlassventilsystems 86 absperrbar, das im Ausführungsbeispiel gem. FIG. 5 als Einlassventil 88 ausgeführt ist. Andererseits ist der Brennraum 80 gegenüber dem zur Auspuffanlage 82 führenden Abgasstrang 90 mittels eines Auslassventilsystems 92 absperrbar, das im Ausführungsbeispiel gem. FIG. 5 als Auslassventil 94 ausgeführt ist.

Der Verbrennungsmotor 70 ist gezielt für eine besonders hohe spezifische Leistungsausbeute und/oder einen besonders hohen Wirkungsgrad und damit geringen spezifischen Kraftstoffverbrauch ausgelegt. Dazu ist vorgesehen, dem aus dem Brennraum 80 während des Auslasstakts des jeweiligen Zylinders 72 abströmenden heißen Abgas zumindest einen Teil der ansonsten eigentlich ungenutzten Abgasenthalpie zu entziehen, um diese in den Wirkungsgrad steigernder Weise in mechanische Antriebsenergie und/oder Erhöhung der Frischgasluftdichte im Sinne einer Aufladung umzuwandeln. Dies soll erreicht werden, indem der während des Auslasstakts aus dem Brennraum 80 abströmenden Abgasdruckwelle in möglichst weitgehendem Umfang Impuls und/oder Energie entzogen und zur Vorverdichtung des dem Brennraum 80 zuströmenden Frischgases auf dieses übertragen wird.

Um dies zu ermöglichen, ist der Abgasstrang 90 verzweigt ausgeführt. Dazu ist in den Abgasstrang 90 eine Impulsweiche 96 geschaltet, die eingangsseitig mit dem Auslassventilsystem 92 und ausgangsseitig einerseits über eine Stichleitung 98 mit der Primärseite der nach den vorstehenden Ausführungen ausgelegten Membranpumpe 1 und andererseits mit einer zur Auspuffanlage 82 führenden Abgasleitung 102 verbunden ist. Der Brennraum 80 ist somit auslassseitig über das Auslassventilsystem 92 und über die Impulsweiche 96 sowohl mit der Auspuffanlage 82 als auch mit der Primärseite der Membranpumpe 1 verbunden.

Durch diese Schaltung ist im Ausführungsbeispiel gem. FIG. 5 die Nutzung der in der Membranpumpe 1 dem Abgas entzogenen Enthalpie zur Kompression und damit Vorspannung eines der Membranpumpe 1 sekundärseitig zugeführten Kaltgasstroms, nämlich in diesem Ausführungsbeispiel dem zur Einspeisung in den Brennraum 80 vorgesehenen Frischgasluftstrom, vorgesehen. Dementsprechend ist im Ausführungsbeispiel gem. FIG. 5 die Membranpumpe 1 sekundärseitig in eine Frischgasleitung 106 geschaltet, die über einen Ladeluftkühler 108 geführt ist und ausgangsseitig über das Einlassventilsystem 86 mit dem Brennraum 80 des Zylinders 72 absperrbar verbunden ist.

Im Ausführungsbeispiel gem. FIG. 5 ist der Zylinder 72 des Verbrennungsmotors 70 in dem Moment gezeigt, in dem der Arbeitskolben 74 sich im unteren Totpunkt (UT) befindet und der Auslasstakt des Zylinders 72 beginnt. Das Auslassventil 94 hat begonnen, sich zu öffnen. Beim Öffnen des Auslassventils 94 entweicht das noch unter Restdruck stehende Abgas aus dem Brennraum 80 des Zylinders 72 in den Auslasskanal oder Abgasstrang 90. Da der Restdruck des Abgases im Zylinder 72 in der Regel zwischen 2-8 bar liegt und im Auslasskanal mittlere Abgasgegendrücke von etwa 1,1-1,6 bar vorherrschen, strömt das Abgas auf Grund des überkritischen Druckverhältnisses mit Schallgeschwindigkeit am Auslassventil 94 vorbei. Wegen der hohen Abgastemperaturen, die in der Praxis zwischen 350-1150 °C liegen, erreicht die Schallgeschwindigkeit des Abgases Werte bis zu 1000 m/s. Entsprechend hoch ist der Impuls (p = m · v) der Abgasdruckwelle, der im vorliegenden System gezielt wirkungsgrad- und/oder leistungssteigernd genutzt werden soll.

Je nach Motordrehzahl und Gestaltung des Motorventiltriebs beträgt die Laufzeit der energiereichen primären Abgasdruckwelle ca. 10-50° Kurbelwelle. Die Abgasdruckwelle strömt dabei durch die Impulsweiche 96, die vorteilhafterweise eine Rohrverzweigung darstellt. Die Impulsweiche 96 weist dabei einen eingangsseitig mit dem Auslassventilsystem 92 und ausgangsseitig mit der Primärseite der Membranpumpe 1 verbundenen Hauptkanal 110 auf, von dem ein ausgangsseitig in die Abgasleitung 102 mündender und über diese mit der Auspuffanlage 82 verbundener Abgaskanal 112 abzweigt. Der Hauptkanal 110 mündet somit in die zur Membranpumpe 1 führende Stichleitung 98, wohingegen der Abgaskanal 112 zur Auspuffanlage 82 läuft, über die das Abgas ins Freie gelangt.

Die Impulsweiche 96 hat die Aufgabe, den Impuls des Abgasstroms beim Öffnen des Auslassventils 94 möglichst vollkommen in die Stichleitung 98 zu leiten, so dass in einer ersten Taktphase des Auslasstakts der Impuls der aus dem Zylinder 72 abströmenden Abgasdruckwelle möglichst ganz oder zumindest teilweise auf die Primärseite der Membranpumpe 1 übertragen wird. In dieser Phase soll zunächst ein Abfließen von Abgas in den Abgaskanal 112, was einen Impulsverlust bedeuten würde, weitgehend unterbunden werden. Der angestrebte Impulsübertrag aus der Abgasdruckwelle auf die Primärseite der Membranpumpe 1 kann dabei erfolgen, indem das Abgas zumindest teilweise unmittelbar in die Membranpumpe 1 gelangt; besonders bevorzugt ist aber ein mittelbarer Impulsübertrag, bei dem die aus dem Zylinder 72 abströmende Abgasdruckwelle ihren Impuls teilweise oder möglichst vollständig auf die in der Stichleitung 98 bereits befindliche Gassäule überträgt, die ihn ihrerseits in die Membranpumpe 1 weiterleitet.

In der Membranpumpe 1 trifft der (unmittelbar oder mittelbar eingeleitete) Impuls des Abgasstroms auf die Membran 6 und verformt diese durch Impulsübertragung. Die bewegte Masse der elastischen Membran 6 ist bevorzugt vergleichbar zur Masse der beschleunigten Abgassäule gewählt, um bei der Impulsübertragung ($m_{gas} \cdot v_{gas} = m_{wand} \cdot v_{wand}$) möglichst viel kinetische Energie $\left(\frac{1}{2}\, m_{wand} \cdot v_{wand}^2\right)$ auf die Membran 6 zu übertragen. Das in der Primärseite der Membranpumpe 1 vorhandene Gas expandiert somit im sich vergrößernden Primärgasvolumen oder Teilvolumen 8 der Membranpumpe 1. Gleichzeitig wird auf der gegenüberliegenden Seite der Membran 6 Frischgas im sich verkleinernden, in die Frischgasleitung 106 geschalteten Sekundär- oder Frischgasvolumen oder Teilvolumen 10 der Membranpumpe 1 komprimiert. In der Membranpumpe 1 wird somit die auf der Primärseite in Expansionsarbeit umgewandelte Enthalpie des Abgases in Kompressionsenergie des in der Frischgasleitung 106 auf der Sekundärseite geführten Frischgases umgewandelt.

Durch die äußerst geringe Masse der Membran 6 ist eine sehr schnelle Volumenänderung in der Membranpumpe 1 und dem entsprechend eine unverzügliche Entspannung des Abgases innerhalb weniger Grad Kurbelwelle ermöglicht, so dass die für die Umwandlung der auf der Primärseite in Expansionsarbeit umgewandelten Enthalpie des Abgases in Kompressionsenergie des in der Frischgasleitung 106 auf der Sekundärseite geführten Frischgases vorgesehene erste Taktphase des Auslasstakts entsprechend kurz gehalten werden kann.

Anschließend folgt die zweite Taktphase des Auslasstakts, in der das Abgas zur Auspuffanlage 82 strömt. Nach erfolgter Deformation der Membran 6 wird diese durch eine Rückstellkraft wieder in ihre Ausgangslage bewegt und schiebt das Abgas bzw. die in der Stichleitung 98 befindliche Gassäule über die Stichleitung 98 zur Impulsweiche 96 zurück. Von dort gelangt das Abgas in der zweiten Taktphase des Auslasstakts unter Umgehung der Membranpumpe 1, also ohne diese zu durchströmen, in den Abgaskanal 102. Ebenso schiebt der Kolben 74 das im Zylinder 72 noch vorhandene Abgas aus diesem über den Abgasstrang 90 und die Impulsweiche 96 in den Abgaskanal 112. Das Frischgas wird hingegen während der Kompression aus der Membranpumpe 1 durch ein dort vorgesehenes Rückschlagventil in die als Druckspeicherleitung vorgesehene und ausgestaltete Frischgasleitung 106 gedrückt, in der es verweilt, bis das Einlassventil 88 und ein eventuell vorhandenes Zusatzventil 120 sich öffnen. Die Frischgasleitung 106 kann somit als Zwischenspeicher angesehen werden, dem das in der Membranpumpe 1 komprimierte Frischgas zugeführt und dort zur Einspeisung in den Brennraum 80 des Zylinders 72 bereitgehalten wird.

Um eine besonders hohe Steigerung des Wirkungsgrads des Verbrennungsmotors 70 mittels der Nutzung der Abgasenthalpie zu ermöglichen, ist die Membranpumpe 1 für einen besonders effizienten Impulsübertrag aus der Abgasdruckwelle auf die Membran 6 und somit eine Umwandlung in Kompressionsenergie des Frischgases ausgelegt. Dazu ist die Einleitung der Abgasdruckwelle in das Primärvolumen der Membranpumpe 1 über den Diffusor besonders günstig.

Wie in der Darstellung gem. FIG. 5 angedeutet, wird der Diffusor dabei in diesem Ausführungsbeispiel durch die trichterartige oder kegelstumpfartige Formgebung des Gehäusedeckels 12, entsprechend der in FIG. 1 dargestellten Variante der Membranpumpe 1, realisiert. Selbstverständlich sind aber auch alle anderen dargestellten Varianten für die Ausgestaltung der Membranpumpe 1, 1', 1" vorteilhaft und günstig.

Alternativ oder zusätzlich kann der erfindungsgemäß für die Einleitung der Abgasdruckwelle in die Membranpumpe 1 vorgesehene Diffusor aber auch durch eine entsprechende Ausgestaltung der Stichleitung 98 an sich realisiert sein. In dieser eigenständig erfinderischen Variante weist die Stichleitung 98 in ihrem Einmündungsbereich in die Membranpumpe 1 eine im Vergleich zu ihrer Verbindungsstelle mit der Impulsweiche 96 mindestens um das Eineinhalbfache vergrößerte freie Querschnittsfläche auf.

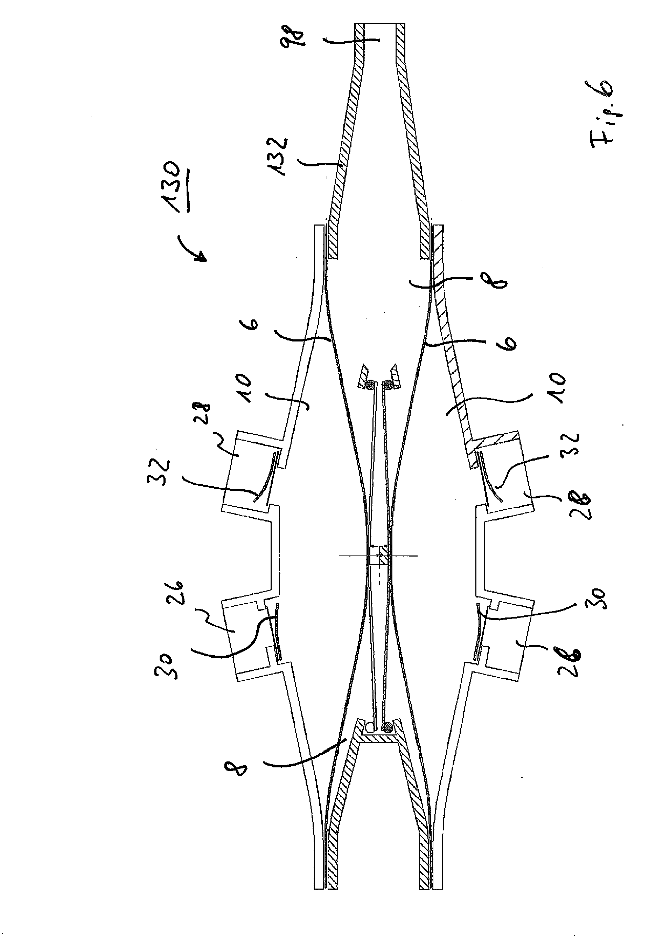

Eine auf einer derartigen Ausführung der Stichleitung 98 als Diffusorelement basierende besonders vorteilhafte Variante der Erfindung, die insbesondere für Anwendungen in Mehrzylindermotoren besonders günstig und geeignet ist, ist schematisch in FIG. 6 gezeigt. Dabei sind in einer Membranpumpeneinheit 130 mehrere Komponenten einzelner Membranpumpen zusammengeschaltet und kombiniert, um ein größeres Pumpvolumen zu erreichen. Vorteilhaft sind dabei Anordnungen, bei denen die Kammern gleicher Funktion zusammengefasst werden. Insbesondere ist dabei ein gemeinsames, das Primärvolumen für zwei oder mehr Sekundärvolumina bildende Teilvolumen 8 vorgesehen, das beidseitig von jeweils einer elastisch verformbaren Membran 6 begrenzt ist. Das Teilvolumen 8 ist antriebsgasseitig mit der Stichleitung 98 verbunden, die sich unmittelbar vor der Einmündung in das Teilvolumen 8 in ihrem Querschnitt aufweitet und damit den Diffusorbereich 132 bildet. Damit ist auch hier im Einströmbereich ein diffusorartiger Rohrverlauf vorgesehen, dessen Leitungsquerschnitt sich zur Primärseite der Membranpumpe hin vergrößert und in diesem Ausführungsbeispiel einen annähernd rechteckigen Querschnittsverlauf annimmt.

Sekundärseitig ist beidseitig des Teilvolumens 8 in diesem Beispiel jeweils ein die Sekundärseite bildendes Teilvolumen 10 angeordnet, das jeweils über die zugeordnete Membran 6 vom ersten Teilvolumen 8 gasdicht getrennt ist, und das jeweils - analog zu den vorgenannten Beispielen - über einen Frischgasdruckkanal/- saugkanal 26, 28 in den Frischgasstrang jeweils eines Zylinders eines Verbrennungsmotors geschaltet ist. Damit können über die Membranpumpeneinheit 130 beispielsweise zwei Zylinder des Verbrennungsmotors gleichzeitig mit vorkomprimiertem Frischgas versorgt werden, wobei lediglich eine Stichleitung 98 mitsamt dem zugeordneten primärseitigen Teilvolumen 8 erforderlich ist.

Beispielsweise kann ein gemeinsamer Gehäusedeckel für beide Pumpeneinheiten vorgesehen sein. Eine solche Doppelkammer auf der Seite des Arbeitsgases lässt das Antriebsgas vorteilhafterweise seitlich auf das Zentrum der Membranen 6 zuströmen. Damit ist der gewünschte Druckverlauf erreichbar.

Um den angestrebten Energieübertrag von Antriebsgas auf die Membran 6 durch Impulsübertrag, beispielsweise in der Auslegung gem. FIG. 5, noch weiter zu verbessern, ist vorteilhafterweise die Gasmasse im Hinblick auf die Membranmasse geeignet gewählt. Vorzugsweise sind Gasmasse und Membranmasse, einschließlich aller bewegter, mit der Membran 6 verbundener Massen, in etwa gleich. Da in der Praxis die Membranmasse häufig größer ausfällt als die sich in der Druckwelle befindende Gasmasse, kann die Gasmasse, die letztendlich auf die Membran 6 wirkt, durch das sich in der Stichleitung 98 befindliche Gaspolster vergrößert werden. Diesem Gaspolster ist auch die im Diffusor befindliche Gasmasse zuzurechnen. Eine somit in die Stichleitung 98 einlaufende Druckwelle trifft mit ihrem Impuls auf die sich in der Stichleitung 98 und dem Diffusor befindliche Gasmasse, beschleunigt diese, wobei sich die Gesamtgasmasse erhöht, aber die Gasgeschwindigkeit der Gesamtgasmasse niedriger wird als die der anfangs einlaufenden Druckwelle. Der Impuls jedoch bleibt annähernd erhalten mit dem Resultat, dass Gasmasse und Membranmasse sich im Verhältnis angenähert haben und ein höherer Energieübertrag auf die Membran erfolgt.

Der Anteil des Impulses des Antriebsgases, der nicht auf die Membran 6 übertragen wird, tritt als reflektierte Gasmasse auf. Um diesen Restimpuls des Antriebsgases zur Energieübertragung auf die Membran zu 6 nutzen, ist der Diffusor vor der Membran 6 hilfreich, da er den Gasstrom kegelförmig auf die Membran 6 treffen lässt und somit die reflektierten Gasmoleküle eine radiale Komponente besitzen, die sie unter weiterer Impulsabgabe zwischen Membran 6 und Gehäusedeckel 12 radial nach außen zum Gehäuserand laufen lässt, so dass sich hier der statische Gasdruck weiter erhöht.

Da die Membranpumpe 1 im Ausführungsbeispiel mit heißem Antriebsgas, nämlich dem Abgas aus dem Verbrennungsmotor 70, betrieben wird, ist die Stichleitung 98 einschließlich Diffusor zum Arbeitsraum vorteilhafterweise in ihrem Volumen um das 1,5- bis 3-Fache größer als das Pumpvolumen der Membranpumpe 1 ausgelegt. Die demzufolge vor der Membran 6 in der Stichleitung 98 und/oder dem Diffusor stehende Gassäule stellt eine thermische Isolierung gegen das heiße Abgas des Verbrennungsmotors 70 dar. Ein direktes Auftreffen der heißen Druckwelle auf die Membran 6 wird durch diese vorgelagerte Gassäule verhindert.

Die Stichleitung 98 kann zudem zur Temperaturabsenkung des Antriebsgases in der Membranpumpe 1 bei Bedarf gekühlt werden. Vorteilhaft zweigt die Stichleitung 98 zur Membranpumpe 1 direkt, wie in FIG. 5 dargestellt, am Zylinderkopf des Verbrennungsmotors 70 von der Abgas führenden Leitung ab. Dieser Abzweig sollte für geringe Verluste der antreibenden Druckwelle grundsätzlich möglichst nahe am Entstehungsort der Gaspulsationen, wie beispielsweise am Auslasskanal eines Motorzylinderkopfs, angebracht werden. Der Abzweig ist vorteilhafterweise derart gestaltet, das der in den Abzweig einlaufende Gasimpuls vornehmlich in den Zweig der Stichleitung 98 zur Membranpumpe 1 hineinläuft, wie beispielsweise gerade Rohrdurchgänge in Pumpenrichtung, bzw. bei Krümmungen im Abzweig den Gasabfluss zum Schalldämpfer auf die Krümmungsinnenseite des Pumpenabzweigs zu legen.

Bezugszeichenliste

| | |
|---|---|
| 1, | 1', 1" Membranpumpe |
| 2 | Druckgehäuse |
| 4 | Innenvolumen |
| 6 | Membran |
| 8, 10 | Teilvolumen |
| 12, 14 | Gehäusedeckel |
| 16 | Anschlag |
| 18 | Kontaktscheibe |
| 20 | Feder |
| 22 | Federteller |
| 23 | Einströmfläche |
| 24 | Ein- und Auslasskanal |
| 26 | Frischgassaugkanal |
| 28 | Frischgasdruckkanal |
| 30,32 | Rückschlagventil |
| 34 | Innenfläche |
| 36 | Innenseite |
| 40 | Diffusorbereich |
| 42 | Kegelstumpf |
| 44 | Zentralachse |
| 50 | Membranrand |
| 52,54 | O-Ring |
| 56 | Führungsstift |
| 58 | Gleitlager |
| 60 | Blattfeder |
| 70 | Verbrennungsmotor |
| 72 | Zylinder |
| 74 | Arbeitskolben |
| 76 | Pleuel |
| 78 | Kurbelwelle |
| 80 | Brennraum |
| 82 | Auspuffanlage |
| 84 | Gaseinlasssystem |
| 86 | Einlassventilsystem |
| 88 | Einlassventil |
| 90 | Abgasstrang |
| 92 | Auslassventilsystem |
| 94 | Auslassventil |
| 96 | Impulsweiche |
| 98 | Stichleitung |
| 102 | Abgasleitung |
| 106 | Frischgasleitung |
| 108 | Ladeluftkühler |
| 110 | Hauptkanal |
| 112 | Abgaskanal |
| 120 | Zusatzventil |
| 130 | Membranpumpeneinheit |
| 132 | Diffusorbereich |

**Patentansprüche**

1.  Membranpumpe (1, 1', 1"), insbesondere zur Verwendung im Abgasstrang eines Verbrennungsmotors, mit einem Druckgehäuse (2), dessen Innenvolumen (4) über eine Anzahl von elastisch verformbaren Membranen (6) in eine Mehrzahl von gasseitig voneinander getrennten Teilvolumina (8, 10) aufgeteilt ist, wobei die oder jede Membran (6) derart mit einer Vorspannkraft beaufschlagt ist, dass im drucklosen Zustand das die Primärseite bildende Teilvolumen (8) im Rahmen der Verformbarkeit der oder jeder Membran (6) einen Minimalwert aufweist, und dessen Innenseite (36) des die Primärseite bildenden Teilvolumens (8) in einem sich von einer Einströmfläche (23) hin zur Membran (6) erstreckenden Diffusorbereich (40) einen sich kontinuierlich erweiternden Querschnitt aufweist, wobei im drucklosen Zustand der am weitesten in das die Primärseite bildende Teilvolumen (8) hineinragende Punkt der Membran (6) um mindestens 5 mm von der Einströmfläche (23) beabstandet ist.

2.  Membranpumpe (1, 1', 1") nach Anspruch 1, deren Diffusorbereich (40) als Mantelfläche eines Kegelstumpfs (42) ausgeführt ist.

3.  Membranpumpe (1, 1', 1") nach Anspruch 2, bei der der Öffnungswinkel des Kegelstumpfs (42) zwischen 10° und 30° beträgt.

4.  Membranpumpe (1, 1") nach einem der Ansprüche 1 bis 3, deren Einströmfläche (23) eine frei durchströmbare Querschnittsfläche von höchstens 70 % der Fläche der das die Primärseite bildende Teilvolumen (8) begrenzenden Membran (6) aufweist.

5.  Membranpumpe (1, 1', 1") nach einem der Ansprüche 1 bis 4, bei der die Zentralachse (44) des Diffusorbereichs (40) parallel zur Mittelachse der Membran (6) ausgerichtet und vorzugsweise konzentrisch zu dieser positioniert ist.

6.  Membranpumpe (1, 1', 1") nach einem der Ansprüche 1 bis 5, deren Diffusorbereich (40) in Richtung seiner Zentralachse (44) gesehen eine Länge von mindestens dem Eineinhalbfachen des Membranhubs aufweist.

7.  Membranpumpe (1, 1', 1") nach einem der Ansprüche 1 bis 6, bei der die oder jede Membran (6) an ihrem Rand (50) beweglich in das Druckgehäuse (2) eingespannt ist.

8.  Membranpumpe (1, 1', 1") nach einem der Ansprüche 1 bis 7, in deren die Primärseite bildendem Teilvolumen (8) ein Anschlag (16) für die das die Primärseite bildende Teilvolumen (8) begrenzende Membran (6) angeordnet ist.

9.  Membranpumpe (1, 1', 1") nach Anspruch 8, deren Anschlag (16) für die Membran (6) eine federnd gelagerte Auflage (18) für die Membran (6) aufweist.

10. Membranpumpe (1, 1') nach einem der Ansprüche 1 bis 9, in deren die Sekundärseite bildendem Teilvolumen (10) zur Aufbringung der Vorspannkraft auf die Membran (6) eine Rückstellfeder (20) mit Linearführung angeordnet ist.

11. Membranpumpe (1") nach einem der Ansprüche 1 bis 10, in deren die Primärseite bildendem Teilvolumen (8) zur Aufbringung der Vorspannkraft auf die Membran (6) eine Blattfeder (60) als Rückstellfeder angeordnet ist.

12. Verbrennungsmotor (70) mit einer Anzahl von Zylindern (72), in denen jeweils ein auf eine gemeinsame Kurbelwelle (78) wirkender Arbeitskolben (74) geführt ist, wobei der Brennraum (80) des oder jedes Zylinders (72) jeweils einlassseitig über ein ansteuerbares Einlassventilsystem (86) mit einem Gaseinlasssystem (84) und auslassseitig über ein ansteuerbares Auslassventilsystem (92) über eine Impulsweiche (96) sowohl mit einer Auspuffanlage (82) als auch über eine Stichleitung (98) mit der Primärseite einer sekundärseitig in das Gaseinlasssystem (84) geschalteten Membranpumpe (1, 1', 1") verbunden ist, und wobei die Membranpumpe (1, 1', 1") als Membranpumpe (1, 1', 1") nach einem der Ansprüche 1 bis 11 ausgeführt ist.

13. Verbrennungsmotor (70) mit einer Anzahl von Zylindern (72), in denen jeweils ein auf eine gemeinsame Kurbelwelle (78) wirkender Arbeitskolben (74) geführt ist, wobei der Brennraum (80) des oder jedes Zylinders (72) jeweils einlassseitig über ein ansteuerbares Einlassventilsystem (86) mit einem Gaseinlasssystem (84) und auslassseitig über ein ansteuerbares Auslassventilsystem (92) über eine Impulsweiche (96) sowohl mit einer Auspuffanlage (82) als auch über eine Stichleitung (98) mit der Primärseite einer sekundärseitig in das Gaseinlasssystem (84) geschalteten, insbesondere nach einem der Ansprüche 1 bis 11 ausgestalteten Membranpumpe (1, 1', 1") verbunden ist, und wobei die die Membranpumpe (1, 1', 1") primärseitig mit der Impulsweiche (96) verbindende Stichleitung (98) in ihrem Einmündungsbereich in die Membranpumpe (1, 1', 1") eine im Vergleich zu ihrer Verbindungsstelle mit der Impulsweiche (96) mindestens um das Eineinhalbfache vergrößerte freie Querschnittsfläche aufweist.

14. Verbrennungsmotor (70) nach Anspruch 13, bei der die in der Art eines Diffusors mit einem sich in Strömungsrichtung des Gases gesehen von der Impulsweiche (96) weg erweiternden Querschnitt ausgestaltete Stichleitung (98) ausgangsseitig in eine Membranpumpeneinheit (130) mündet, in der einem gemeinsamen Primärvolumen in einem gemeinsamen Gehäusedeckel eine Mehrzahl von gasseitig voneinander getrennten Sekundärvolumina zugeordnet sind.

15. Verbrennungsmotor (70) nach einem der Ansprüche 12 bis 14, bei dem das von dem die Primärseite der Membranpumpe (1, 1'. 1") bildenden Teilvolumen (8) und/oder dem Innenvolumen der Stichleitung (98) gemeinsam gebildete Gaspolstervolumen mindestens das 1,5-Fache, vorzugsweise mindestens das 3-Fache, des Pumpvolumens der Membranpumpe (1, 1', 1") beträgt.

Fig. 1

Fig. 2

Fig. 3

Fig. 4

EP 3 061 970 A1

Fig. 5

Fig. 6

**Europäisches Patentamt**

**European Patent Office**

**Office européen des brevets**

# EUROPÄISCHER RECHERCHENBERICHT

**Nummer der Anmeldung**

EP 15 15 7064

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 1 208 347 A (KALETSCH) 23. Februar 1960 (1960-02-23) | 1-5 | INV. F04B45/04 F04B45/053 |
| Y | * Seite 2, Spalte 1, Absatz 6 - Seite 3, Spalte 1, Absatz 4; Abbildung 1 * ----- | 7-9 | |
| Y | US 3 093 086 A (ALTOZ FRANK E ET AL) 11. Juni 1963 (1963-06-11) * Abbildung 1 * ----- | 7 | |
| Y | DE 10 2006 055556 A1 (TOYOTA JIDOSHOKKI KARIYA KK [JP]) 6. Juni 2007 (2007-06-06) * Zusammenfassung; Abbildung 1 * ----- | 7 | |
| Y | JP S54 45806 A (SHIBAURA ENG WORKS LTD) 11. April 1979 (1979-04-11) * das ganze Dokument * ----- | 8,9 | |
| A | DE 33 12 344 A1 (LOCHBUEHLER ENZMANN JUERGEN) 11. Oktober 1984 (1984-10-11) * Zusammenfassung; Abbildung 1 * ----- | 1-15 | |
| A | JP S55 76876 U (UNKNOWN) 27. Mai 1980 (1980-05-27) * das ganze Dokument * ----- | 1-15 | RECHERCHIERTE SACHGEBIETE (IPC) F04B |
| A | JP S55 165982 U (UNKNOWN) 28. November 1980 (1980-11-28) * das ganze Dokument * ----- | 1-15 | |

Der vorliegende Recherchenbericht wurde für alle Patentansprüche erstellt

| Recherchenort | Abschlußdatum der Recherche | Prüfer |
|---|---|---|
| München | 29. Juli 2015 | Ziegler, Hans-Jürgen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 15 7064

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-2015

| Im Recherchenbericht angeführtes Patentdokument | Datum der Veröffentlichung | Mitglied(er) der Patentfamilie | Datum der Veröffentlichung |
|---|---|---|---|
| FR 1208347 A | 23-02-1960 | FR 1208347 A <br> NL 99723 C <br> NL 228291 A | 23-02-1960 <br> 29-07-2015 <br> 29-07-2015 |
| US 3093086 A | 11-06-1963 | KEINE | |
| DE 102006055556 A1 | 06-06-2007 | CN 1971046 A <br> DE 102006055556 A1 <br> JP 4770424 B2 <br> JP 2007146690 A <br> KR 20070055338 A <br> US 2007148015 A1 | 30-05-2007 <br> 06-06-2007 <br> 14-09-2011 <br> 14-06-2007 <br> 30-05-2007 <br> 28-06-2007 |
| JP S5445806 A | 11-04-1979 | KEINE | |
| DE 3312344 A1 | 11-10-1984 | KEINE | |
| JP S5576876 U | 27-05-1980 | KEINE | |
| JP S55165982 U | 28-11-1980 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 1031061
- FR 889617
- FR 866840
- EP 2846019 A1
- EP 2846020 A1